# EUROPÄISCHE PATENTSCHRIFT

(11) **EP 1 313 961 B1**
(45) Veröffentlichungstag und Bekanntmachung des Hinweises auf die Patenterteilung: **31.05.2006**
(21) Anmeldenummer: 01965230.4
(22) Anmeldetag: 29.08.2001
(51) Int. Cl.: F16D 33/16

(54) **HYDRODYNAMISCHE BAUEINHEIT**
HYDRODYNAMIC COMPONENT
COMPOSANT HYDRODYNAMIQUE

(30) Priorität: 30.08.2000 DE 10042865; 20.09.2000 DE 10046833
(43) Veröffentlichungstag der Anmeldung: 28.05.2003
(73) Patentinhaber: Voith Turbo GmbH & Co. KG, 89522 Heidenheim (DE)
(72) Erfinder: VOGELSANG, Klaus, 74564 Crailsheim (DE); KERNCHEN, Reinhard, 74589 Satteldorf (DE); KLEMENT, Werner, 89520 Heidenheim (DE)
(74) Vertreter: Dr. Weitzel & Partner
(86) Internationale Anmeldenummer: PCT/EP2001/009961
(87) Internationale Veröffentlichungsnummer: WO 2002/018813

(56) Entgegenhaltungen:
- FR-A- 2 276 516
- GB-A- 1 346 677
- US-A- 3 178 889
- US-A- 4 423 803

## Beschreibung

Die Erfindung betrifft eine hydrodynamische Baueinheit, im einzelnen mit den Merkmalen aus dem Oberbegriff des Anspruchs 1, wie aus GB 1 346 677 bekannt.

Hydrodynamische Bauelemente in Form von hydrodynamischen Kupplungen oder hydrodynamischen Drehzahl-/Drehmomentumformern für den Einsatz als Anfahrelemente in Antriebssträngen sind in einer Vielzahl von Ausführungen bekannt. Stellvertretend wird dazu auf das Druckwerk Voith: "Hydrodynamik in der Antriebstechnik", Vereinigte Fachverlage, Kraußkopf Ingenieur-Digest, 1987 bezüglich des allgemeinen Aufbaus dieser Elemente und des Einsatzes in stationären oder mobilen Antriebssystemen verwiesen. Dabei sind unterschiedliche Systeme zur Befüllung und Entleerung bekannt. Die Befüllung und Entleerung erfolgt in der Regel in einem offenen System, umfassend einen Betriebsmittelbehälter, welcher mit dem Arbeitsraum gekoppelt ist. Zusätzlich sind im hydrodynamischen Bauelement Mittel zur Kühlung des Betriebsmittels im Arbeitskreislauf zugeordnet. Im allgemeinen erfolgt dies über einen, dem Arbeitskreislauf zugeordneten externen Kreislauf, wobei Betriebsmittel während des Betriebes des hydrodynamischen Bauelementes aus dem Arbeitskreislauf in den externen Kreislauf, im einzelnen über Kühleinrichtungen order Wärmetauscher geführt wird. Die Steuerung des Füllungsgrades erfolgt dabei über entsprechende Stelleinrichtungen, entweder durch Steuerung der Zufuhr und der Abfuhr vom Arbeitsraum beziehungsweise zum Arbeitsraum, der Abfuhr von Betriebsmittel aus dem Arbeitsraum und Zwischenspeicherung in einer separaten Speicherkammer oder durch Kombination beider Möglichkeiten.

Der Erfindung liegt die Aufgabe zugrunde, ein hydrodynamisches Bauelement der eingangs genannten Art für den Einsatz in Anfahreinheiten für Antriebssysteme derart weiterzuentwickeln, daß eine Mehrzahl von Funktionen, insbesondere die Realisierung der Kühlung des Betriebsmittels, eine Füllungsgradsteuerung sowie die Befüllung und Entleerung mit einer minimalen Bauteilanzahl realisiert werden können und mit geringem konstruktiven Aufwand.

Die erfindungsgemäße Lösung ist durch die Merkmale des kennzeichnenden Teils des Anspruchs 1 charakterisiert. Vorteilhafte Ausgestaltungen sind in den Unteransprüchen wiedergegeben.

Erfindungsgemäß umfaßt ein hydrodynamisches Bauelement mindestens zwei rotierende Kreislaufteile in Form zweier Schaufelräder, welche miteinander mindestens einen torusförmigen Arbeitsraum bilden, der mit Betriebsmittel befüllbar ist und in welchem sich bei Betrieb des hydrodynamischen Bauelementes ein rotierender Arbeitskreislauf einstellt. Dem torusförmigen Arbeitsraum ist ein Zulauf und ein Ablauf zugeordnet, der mit einem geschlossenen Kreislauf verbunden ist. Dieser umfaßt den Arbeitskreislauf und einen externen Teil, das heißt außerhalb des torusförmigen Arbeitsraumes geführten Teiles, der mit dem Arbeitskreislauf gekoppelt ist. Erfindungsgemäß ist dieser geschlossene Kreislauf druckdicht ausgeführt. Dies bedeutet im einzelnen, daß der Zulauf, insbesondere der Zulaufraum zum Arbeitsraum und der Ablauf, insbesondere der Abströmraum gegenüber dem hydrodynamischen Bauelement dicht ausgeführt sind und des weiteren die Betriebsmittelführungsstrecke zwischen dem Zulauf und dem Ablauf im externen Teil des geschlossenen Kreislaufes, d.h. außerhalb des torusförmigen Arbeitsraumes komplett abgedichtet ist.

Die erfindungsgemäße Lösung ermöglicht es, daß im Betrieb des hydrodynamischen Bauelementes bei Abfuhr von Betriebsmittel aus dem Arbeitskreislauf in den externen Teil des geschlossenen Kreislaufes Betriebsmittel im externen Teil des Kreislaufes geführt wird und, da der Gesamtkreislauf geschlossen ausführt ist, dem Zulauf wieder zugeführt wird. Aufgrund der druckdichten Ausführung wird während des Betriebes des hydrodynamischen Bauelementes, das heißt bei Rotation eines Schaufelrades und dadurch bedingt durch Mitnahme mittels dem Arbeitskreislauf mindestens eines weiteren Schaufelrades ein durch das hydrodynamische Bauelement selbstetzeugter Druck im geschlossenen System aufrecht erhalten. Dieser Kreislauf kann dabei für sich allein schon als Kühlkreislauf bezeichnet werden, da über die Leitungsverbindungen zwischen dem Ablauf und dem Zulauf Wärme durch Wärmestrahlung abgeführt werden kann. Es ist somit bereits mit dieser Ausführung ein Kühlkreislauf möglich.

Werden Mittel zur Erzeugung eines Beeinflussungsdruckes auf das im geschlossenen Kreislauf geführte Betriebsmittel vorgesehen, besteht die Möglichkeit zusätzlich den Füllungsgrad des hydrodynamischen Bauelementes zu steuern.

Im geschlossenen Kreislauf ist mindestens eine Knotenstelle zum wahlweisen Anschluß von Mitteln zur Befüllung und Entleerung und Mitteln zur Druckvorgabe im System angeordnet. Die Mittel zur Druckvorgabe sind dabei druckdicht an den geschlossenen Kreislauf angeschlossen und dienen der Erzeugung eine statischen Überlagerungsdruckes im geschlossenen Kreislauf. Die Mittel zur Druckvorgabe umfassen einen druckdicht abgeschlossenen Behälter, welcher druckdicht mit dem geschlossenen Kreislauf verbunden ist. Die Druckvorgabe erfolgt dabei durch Aufbringen eines Druckes auf den Betriebsmittelspiegel im. Eine andere Möglichkeit besteht in der Erzeugung eines Druckes durch zusätzliche Elemente, beispielsweise eine entsprechende Pumpeinrichtung.

Die Mittel zur Befüllung umfassen eine Betriebsmittelbehältereinrichtung und Mittel zum Betriebsmitteltransport, beispielsweise Pumpeinrichtungen. Diese dienen auch dem Verlustausgleich.

Nach der Erfindung werden zur Vereinfachung des Gesamtsystems die Mittel zur Befüllung und Entleerung und die Mittel zur Druckvorgabe von einem System gebildet. Die Befüllung und Entleerung erfolgt dabei vorzugsweise ebenfalls über den druckdicht an das geschlossene System angeschlossenen Behälter und Ausübung eines Druckes auf den Betriebsmittelspiegel oder über Pumpeinrichtungen.

Eine Weiterentwicklung der Erfindung beinhaltet das Vorsehen beziehungsweise die Zuordnung von stehenden Staudruckrohren zum Abströmraum, welcher von einem mitrotierenden Gehäuseteil begrenzt wird. Vorzugsweise sind eine Mehrzahl von stehenden Staudruckrohren vorgesehen, welche im bestimmten Abstand zueinander in Umfangsrichtung angeordnet sind. Die Staudruckrohe fungieren beim Eintauchen in den Abströmraum als Staudruckpumpeinrichtung und sind mit den mit dem Abströmraum gekoppelten Leitungsverbindungen verbunden. Diese wandeln dabei die kinetische Energie in Druckenergie um und erzeugen so selbsttätig einen Kühlkreislauf, welcher zur Sicherstellung des Dauerbetriebes des hydrodynamischen Bauelementes erforderüch ist. In einer weiteren Ausführung der erfindungsgemäßen Lösung sind im geschlossenen Kreislauf Mittel zur Wärmeabfuhr vorgesehen. Diese können dabei als Kühleinrichtungen oder Wärmetauscher ausgeführt sein.

Die erfindungsgemäße Lösung ist für hydrodynamische Bauelemente in Form von hydrodynamischen Kupplungen, umfassend ein Pumpenrad und ein Turbinenrad, welche miteinander mindestens einen torusförmigen Arbeisraum bilden - bei Ausführung als Doppelkupplung zwei torusförmige Arbeitsräume - und hydrodynaische Drehzahl-/Drehmomentwandler geeignet. Es ist lediglich nur ein geschlossener externer Kreislauf erforderlich, über welchen unterschiedliche Funktionen, insbesondere die Kühlung, die Verlustbetriebsmittelnachfüllung und die Füllungsgradsteuerung realisieren.

Bei Ausführung als hydrodynamische Kupplung umfaßt diese ein mit dem Pumpenrad drehfest gekoppeltes Gehäuse, welches auch als Kupplungsschale bezeichnet wird. Zwischen Turbinenrad und dem Kupplungsgehäuse ist dabei eine Abdichtung vorgesehen, wobei der so gebildete Raum einen Abströmraum bildet. Desweiteren ist zwischen der Pumpenradschale und einem ortsfest beziehungsweise stehenden Gehäuseteil eine weitere Dichtung vorgesehen. Der Außenumfang vom Pumpenrad und der Innenumfang der Kupplungsschale sowie der stehende Gehäuseteil begrenzen dabei einen Staudruckpumpenraum, in welchem die stehenden Staudruckrohre hineinragen. Die Staudruckrohre sind über Leitungsverbindungen im ruhenden Gehäuseteil mit den Leitungen des geschlossenen Kreislaufes verbunden. Die Leitungsverbindungen sind derart ausgeführt, daß diese ebenfalls druckdicht sind. Desweiteren sind zur druckdichten Ausführungen des geschlossenen Kreislaufes zwischen dem Pumpenrad und dem Turbinenrad Dichteinrichtungen erforderlich, vorzugsweise ist eine mitrotierende Dichtung im Bereich unterhalb des Innenumfanges der beschaufelten Teile von Pumpenrad und Turbinenrad zwischen diesen angeordnet. Diese einzelnen Abdichtungen ermöglichen ein komplett druckdicht abgeschlossenes System.

Die erfindungsgemäße Lösung wird nachfolgend anhand von Figuren erläutert. Darin ist im einzelnen folgendes dargestellt:
- Figur 1: verdeutlicht in schematisch vereinfachter Darstellung das Grundprinzip des Aufbaus und der Funktionsweise eines hydrodynamischen Bauelementes mit einem geschlossenen Kreislauf;
- Figuren 2a und 2b: verdeutlichen schematisch anhand einer Ausführung eines hydrodynamischen Bauelementes in Form einer hydrodynamischen Kupplung ein bevorzugtes Beispiel für ein hydrodynamisches Bauelement mit einem geschlossenen Kreislauf;
- Figur 3: verdeutlicht ein erfindungsgemäß gestaltetes hydrodynamisches Bauelement in Form eines hydrodynamischen Drehzahl-/Drehmomentwandlers mit geschlossenem Kreislauf.

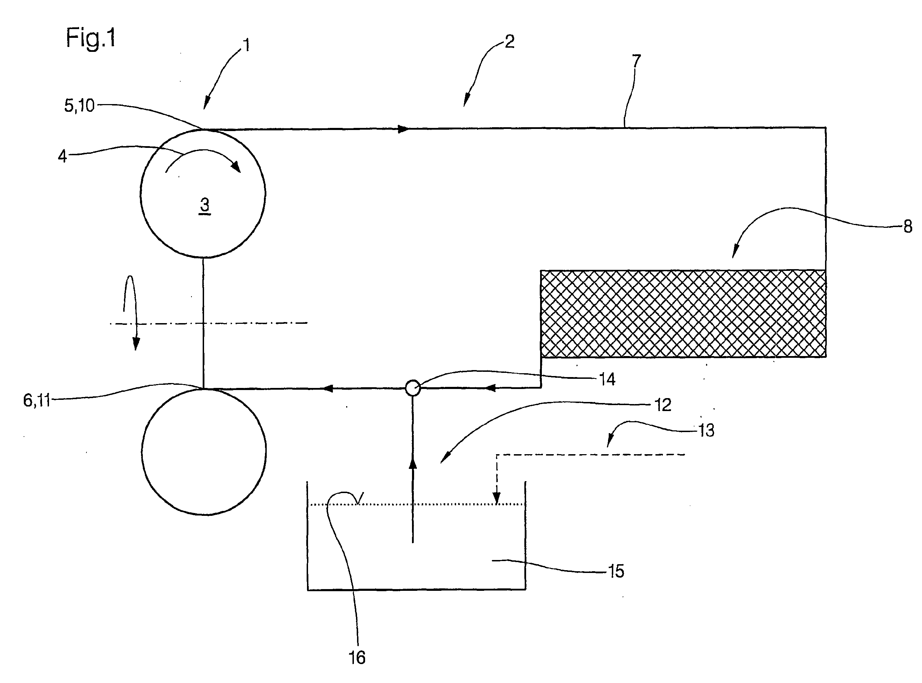

Die Figur 1 verdeutlicht in schematisch vereinfachter Darstellung das Grundprinzip des Aufbaus und der Funktionsweise eines hydrodynamischen Bauelementes 1 mit einem geschlossenen Kreislauf 2 in Form eines geschlossenen Drucksystems, welches die Funktionen der Kühlung, Verlustbetriebsmittelnachführung und das Aufbringen eines äußeren Druckes in Form eines statischen Übertagerungsdruckes zur Beeinflussung des Füllungsgrades des Arbeitsraumes beinhaltet. Das hydrodynamische Bauelement 1 umfaßt mindestens ein rotierendes Schaufelrad, je nach Ausführung des hydrodynamisches Bauelementes 1 in Form eines Pumpenrades 18 bei einer hydrodynamischen Kupplung 17 oder einem hydrodynamischen Wandler, welches im Zusammenwirken mit mindestens einem weiteren beschaufelten Rad einen Arbeitsraum, in der Regel torusförmig und hier mit 3 bezeichnet, bildet. Im torusförmigen Arbeitsraum 3 stellt sich dann bei Betrieb des hydrodynamischen Bauelementes 1 ein sogenannter Arbeitskreislauf 4 ein, welcher auch als hydrodynamischer Kreislauf bezeichnet wird. Dieser Arbeitskreislauf 4 ist im geschlossenen Kreislauf 2 integriert beziehungsweise Bestandteil des geschlossenen Kreislaufes 2 in dem Sinne, daß dieser als eine Funktionseinheit betrachtet wird, welchem im geschlossenen Kreislauf 2 Betriebsmittel zuführbar und/oder abführbar ist. Dem Arbeitskreislauf 4 ist mindestens ein Austritt 5 und ein Zulauf 6 zugeordnet. Der Austritt 5 ist dabei mit einem externen, d.h. außerhalb des torusförmigen Arbeitsraumes 3 geführten Teiles 7 des geschlossenen Kreislaufes 2 verbunden. Des weiteren ist auch der Zulauf 6 mit dem extern, d.h. außerhalb des torusförmigen Arbeitsraumes 3 geführten Teiles 7 des Kreislaufes 2 verbunden. Der geschlossene Kreislauf 2 ist druckdicht, d.h. als geschlossenes Drucksystem ausgeführt. Im geschlossenen Kreislauf 2, insbesondere im externen, d.h. außerhalb des torusförmigen Arbeitsraumes 3 geführten Teiles des Kreislaufes 2, sind vorzugsweise Mittel 8 zur Beeinflussung der Temperatur des im geschlossenen Kreislauf 2 geführten Betriebsmittels vorgesehen. Diese können in Form eines Wärmetauschers oder als Kühleinrichtung, wie in der Figur 1 dargestellt, ausgeführt sein. Für die Funktion der Kühlung wird dabei aus dem torusförmigen Arbeitsraum 3 während des Betriebes des hydrodynamischen Bauelementes 1 entsprechend der Erwärmung des Betriebsmittels im torusförmigen Arbeitsraum 3 Betriebsmittel aus diesem über den geschlossenen Kreislauf 2 und der darin eingeschlossenen Kühleinrichtung 8 geführt und nach entsprechender Kühlung wieder dem Arbeitsraum 3 zugeführt. Die Steuerung des Betriebsmittelstromes im geschlossenen Kreislauf 2 kann dabei unterschiedlich erfolgen, im einfachsten Falle in Abhängigkeit der Drehzahl der rotierenden Kreislaufteile oder wird hinter dem Austritt 5 in einem Abströmraum 10 oder einer, mit dieser gekoppelten Kammer zwischengespeichert und über entsprechende, hier nicht dargestellte Einrichtungen, beispielsweise Staudruckpumpen dem externen Teil 7 des geschlossenen Kreislaufes 2 zugeführt und mittels diesen der Kreislauf selbsttätig aufrechterhalten. Des weiteren besteht die Möglichkeit, den Zustrom von Betriebsmittel aus dem externen Teil 7 des Kreislaufes 2 zum Zulauf 6 des torusförmigen Arbeitsraumes 3 zu steuern. Der Zulauf 6 ist dabei beispielsweise mit einem Zufuhrraum 11 gekoppelt.

Erfindungsgemäß sind zur Realisierung der Funktionen Verlust-Betriebsmittel-Nachführung und der Beeinflußung des Füllungsgrades im torusförmigen Arbeitsraum 3 des hydrodynamischen Bauelementes 1 Mittel zur Befüllung 12 und Mittel 13 zur Druckbeaufschlagung zugeordnet. Diese sind über eine Knotenstelle 14 am geschlossenen Kreislauf 2 anbindbar. Die Knotenstelle 14 wird dabei im einfachsten Fall von einer Ventileinrichtung gebildet, welche mindestens zwei Schaltstellungen umfaßt, eine erste Schaltstellung, die eine vollständige Entkopplung der Mittel zur Befüllung 12 und der Mittel 13 zur Druckvorgabe ermöglicht und eine zweite Schaltstellung, die eine Ankopplung erlaubt. Die Mittel zur Befüllung 12 und die Mittel zur Druckvorgabe 13 werden von einem Element oder System gebildet, beispielsweise einem externen Betriebsmittel-Versorgungstank 15, welcher indirekt über eine zusätzliche Energiequelle, beispielsweise eine hydrostatische Pumpe oder eine andere Einrichtung mit dem geschlossenen Kreislauf 2 über die Knotenstelle 14 in Verbindung steht. Dabei erfolgt aus dem externen Betriebsmittel-Versorgungstank 15 die Verlust-Betriebsmittel-Nachführung, des weiteren kann bei druckdichter Ausführung bzw. Anbindung des Betriebsmittel-Versorgungstankes 15 auch ein statischer Überlagerungsdruck zum Druck im geschlossenen Kreislauf 2 erzeugt werden, wobei dieser Druck entweder durch eine entsprechende Pumpeinrichtung oder beispielsweise Luftdruck auf den Betriebsmittelspiegel im externen Betriebsmittel-Versorgungstank 15 erzeugt werden kann. Der Betriebsmittelspiegel ist mit 16 bezeichnet.

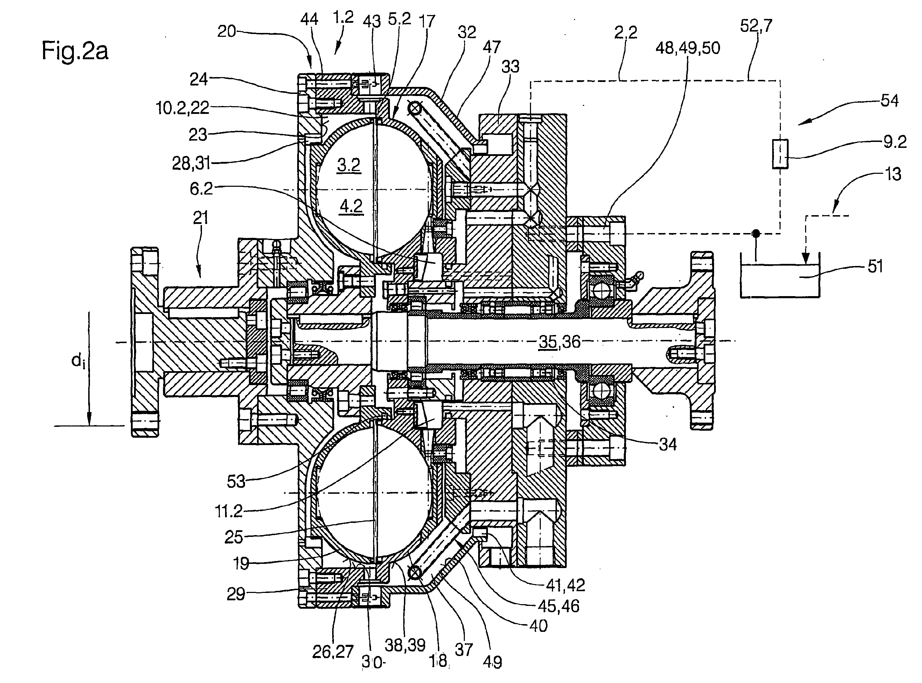

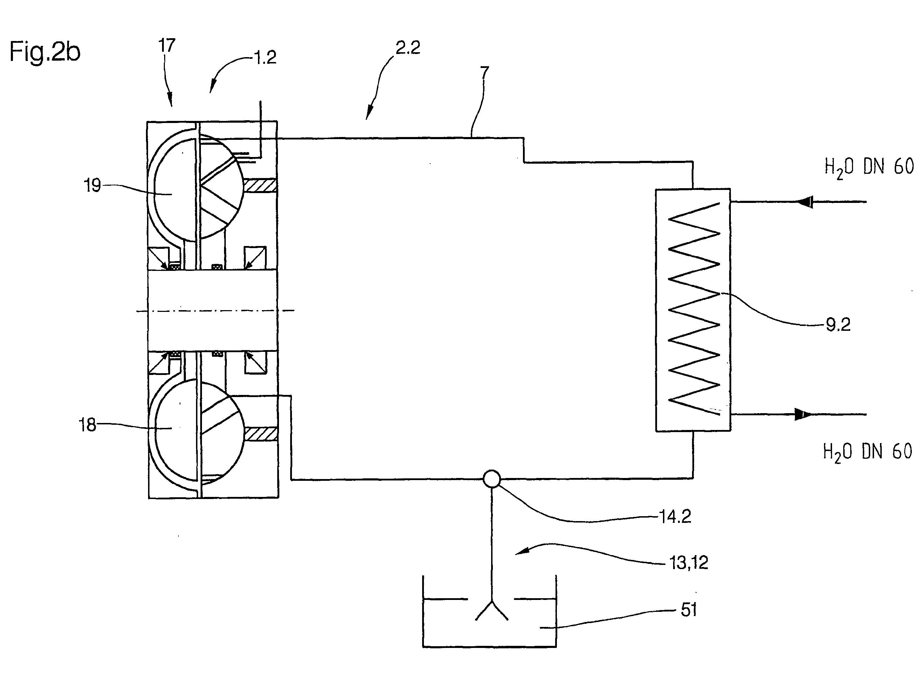

Die Figur 2a verdeutlicht schematisch anhand einer Ausführung eines hydrodynamischen Bauelementes 1.2 in Form einer hydrodynamischen Kupplung 17 ein Beispiel eines geschlossenen Kreislaufes 2.2. Zu diesem Zweck wird beispielhaft auf eine mögliche Ausführung der hydrodynamischen Kupplung 17 zur Anbindung des geschlossenen Kreislaufes 2.2 auf deren konstruktive Ausführung eingegangen. Die hydrodynamische Kupplung 17 umfaßt wenigstens ein als Pumpenrad 18 fungierendes Primärrad und ein als Turbinenrad 19 fungierendes Sekundärrad, welche miteinander den torusförmigen Arbeitsraum 3.2 bilden. Die hydrodynamische Kupplung 17 weist des weiteren ein Gehäuse 20 auf, welches mit dem Pumpenrad 18 drehfest verbunden ist. Das Gehäuse 20 ist dabei auch drehfest mit dem Antrieb 21 der hydrodynamischen Kupplung 17 gekoppelt. Die konkrete Ausgestaltung der drehfesten Verbindungen liegt im Ermessen des zuständigen Fachmannes, weshalb an dieser Stelle nicht näher darauf eingegangen wird.

Das Gehäuse 20 umschließt in axialer Richtung dabei das Turbinenrad 19 unter Bildung eines ersten Zwischenraumes 22. Der erste Zwischenraum 22 wird dabei durch eine Gehäuseinnenwand 23 eines ersten Gehäuseteiles 24, den Austritt 5.2 aus dem Pumpenrad 18 im Bereich einer Trennebene 25 zwischen dem Pumpenrad 18 und dem Turbinenrad 19, dem Außenumfang 26 im Bereich der radial äußeren Erstreckung 27 des Turbinenrades 19 und einem mit dem Pumpenrad 18 direkt drehfest verbundenem oder mit dem Pumpenrad 18 eine bauliche Einheit bildendem weiteren zweiten Gehäuseteil 29, insbesondere dessen Innenfläche 30 begrenzt. Dabei sind Mittel 28 zur Abdichtung des Zwischenraumes 22 zwischen dem Gehäuse 20 und dem Turbinenrad 19 vorgesehen. Diese Mittel zur Abdichtung 28 umfassen mindestens eine berührungsfreie Dichteinrichtung 31, welche vorzugsweise in Form einer Labyrinthdichtung ausgeführt ist. Das Gehäuse 20 bildet des weiteren mit dem Pumpenrad 18 und einem weiteren, mit dem Pumpenrad 18 drehfest gekoppelten Gehäuseteil 32 sowie einem mit Relativdrehzahl zum Gehäuse 20 rotierenden, vorzugsweise jedoch ruhenden zweiten Gehäuse 33, welches über eine Lageranordnung 34 auf einer den Abtrieb 35 der hydrodynamischen Kupplung 17 bildenden Abtriebswelle 36 gelagert ist, einen weiteren zweiten Zwischenraum 37. Dieser wird im wesentlichen durch die Außenfläche 38 des Pumpenrades 18 im radial äußeren Bereich 39, dem die Gehäuseinnenwand 23 tragenden zweiten Gehäuseteil 29 und einer das Pumpenrad 18 in axialer Richtung wenigstens teilweise umschließenden Innenfläche 40 des Gehäuseteiles 32 des Gehäuses 20 gebildet. Das ruhende Gehäuse 33 kann einteilig oder aber mehrteilig ausgeführt sein. Eine zur Realisierung des druckdicht geschlossenen Kreislaufes 2.2 erforderliche Abdichtung des zweiten Zwischenraumes 37 erfolgt über Mittel 41 zur Abdichtung zwischen dem Gehäuse 20 und dem runden Gehäuse 33, welche vorzugsweise eine berührungsfreie Dichtung in Form einer Labyrinthdichtung 42 umfassen. Der erste Zwischenraum 22 bildet dabei den Abströmraum 10.2 aus dem Arbeitskreislauf 3.2 der hydrodynamischen Kupplung 17. Der erste Zwischenraum 22 ist mit dem zweiten Zwischenraum 37 über Durchlaßöffnungen 43 in der Gehäusewand 44 des zweiten Gehäuseteiles 29 verbunden. Im zweiten Zwischenraum 37 sind Mittel 45 zur Abfuhr von, im Betrieb der hydrodynamischen Kupplung 17 durch die Betriebsmittelführung im torusförmigen Arbeitsraum 3.2 in den zweiten Zwischenraum 37 gelangten Betriebsmittels zugeordnet, welche beispielsweise mindestens eine Staudruckpumpe 46 umfassen. Entsprechend der gewünschten abzuführenden Menge an Betriebsmittel und des dazu zur Verfügung stehenden Zeitraumes sind vorzugsweise in Abhängigkeit des möglichen Strömungsquerschnittes, welcher durch die Dimensionierung der Staudruckpumpe 46 bereitstellbar ist, eine Mehrzahl von Staudruckpumpen 46 vorgesehen, welche vorzugsweise in gleichmäßigen Abständen in Umfangsrichtung im Zwischenraum 37 angeordnet sind bzw. in diesen eintauchen. Der zweite Zwischenraum 37 bildet dabei den sogenannten Staudruckpumpenraum 49. Das Staudruckpumpengehäuse wird vom ruhenden Gehäuse 33 und der Pumpenradschale 47, die vom dritten Gehäuseteil 32 des Gehäuses 20 gebildet wird, gebildet. Die Mittel zur Abfuhr 45 von Betriebsmittel aus dem Abströmraum 10.2, insbesondere die Staudruckpumpen 46 sind dabei mit Mitteln 48 zur Führung von Betriebsmittel im geschlossenen Kreislauf 2.2 verbunden. Die Mittel 48 umfassen dazu vorzugsweise Leitungsverbindungen 49 in Form von Betriebsmittetführungskanälen 50, welche teilweise in der dem Pumpenrad 18 zugewandten Gehäusewand bzw. dem ruhenden Gehäuse 33 eingearbeitet sind. Der Zufuhrraum 11.2 ist in der dargestellten Ausführung im wesentlichen in einem Bereich des inneren Durchmessers des Pumpenrades 18 angeordnet. Der geschlossene Kreislauf 2.2 ist druckdicht ausgeführt, wobei hier im Anschluß an die hydrodynamische Kupplung 17 die entsprechenden Leitungsverbindungen 52, welche Bestandteil des externen Teiles des geschlossenen Kreislaufes 7 sind, lediglich mittels unterbrochener Linie verdeutlicht sind. Diesem ist eine Betriebsmittel-Speichereinrichtung 51 zugeordnet, welche mit dem geschlossenen Kreislauf 2.2 verbunden ist, beispielsweise mittels einer Leitungsverbindung 52. Die Betriebsmittel-Speichereinrichtung 51 ist vorzugsweise im Bereich unterhalb der Höhe des torusförmigen Arbeitsraumes 3.2 angeordnet, insbesondere der in Einbaulage äußeren radialen Abmessungen der einzelnen Schaufelräder 18 und 19. Eine Sicherung über einen Siphon oder andere Hilfsmittel kann in diesem Fall entfallen. Die Betriebsmittel-Speichereinrichtung 51 ist dabei druckdicht mit dem Eintritt bzw. Zulauf 6.2 in den torusförmigen Arbeitsraum 3.2 verbunden. Die Mittel zur Abdichtung 41 für den zweiten Zwischenraum 37, insbesondere des Staudruckpumpengehäuses und der Pumpenradschale 47 sowie die Mittel 28 zur Abdichtung zwischen Turbinenrad 19 und dem rotierenden Gehäuse 20 sind räumlich oberhalb der Meridianmitte in Umfangsrichtung und unterhalb des maximalen Profildurchmessers der beiden Schaufelräder - Pumpenrad 18 und Turbinenrad 19 - angeordnet. Des weiteren sind zusätzlich Mittel zur Abdichtung 53 zwischen Pumpenrad 18 und Turbinenrad 19 vorgesehen, wobei diese in radialer Richtung betrachtet unterhalb des inneren Durchmessers dᵢ des torusförmigen Arbeitsraumes 3.2 angeordnet sind. Der geschlossene Kreislauf 2.2 ist somit druckdicht gegenüber der Umgebung. Die Anbindung der Betriebsmittel-Speichereinrichtung 51 erfolgt ebenfalls druckdicht an den geschlossenen Kreislauf 2.2.

Das Gehäuse des hydrodynamischen Bauelementes, insbesondere das Gehäuse 20, das Pumpenrad 18, das Turbinenrad 19, der geschlossene Kreislauf 2.2 sowie die druckdichte Kopplung der Betriebsmittel-Speichereinrichtung 51 mit dem geschlossenen Kreislauf 2.2 und die Mittel 13 zur Beeinflussung des Druckes im geschlossenen Kreislauf bilden Mittel 54 zur Erzeugung einer Druckwaage zwischen einem geschlossenen rotierenden Kreislauf 2.2 und einem ruhenden Medium. Der geschlossene Kreislauf 2.2 wird zwischen dem Austritt 5.2 aus dem torusförmigen Arbeitsraum 3.2 im Bereich der Trennebene 25 und dem Eintritt 6.2 in das Pumpenrad 18 realisiert. Das Betriebsmittel gelangt vom Strömungskreislauf, insbesondere Arbeitskreislauf 4.2 im torusförmigen Arbeitsraum 3.2 über die Austrittsöffnungen 43 im Bereich der Trennebene 19 des Pumpenrades 18 und des Turbinenrades 19 und die Verbindungskanäle 43 in den zweiten Zwischenraum 37, von wo das Betriebsmittel über die Mittel 45 zur Abfuhr aus dem zweiten Zwischenraum, insbesondere die Staudruckpumpen 45 im geschlossenen Kreislauf 2.2 geführt wird.

Die Figur 2b verdeutlicht stark schematisiert noch einmal die Ausführung gemäß Figur 2a einer hydrodynamischen Kupplung 17 mit geschlossenen Kreislauf 2.2. Für gleiche Elemente werden die gleichen Bezugszeichen verwendet. Die Anbindung der Betriebsmittel-Speichereinrichtung 51 erfolgt über die Knotenstelle 14.2. Zusätzlich erkennbar ist die Funktion des Wärmetauschers 9.2.

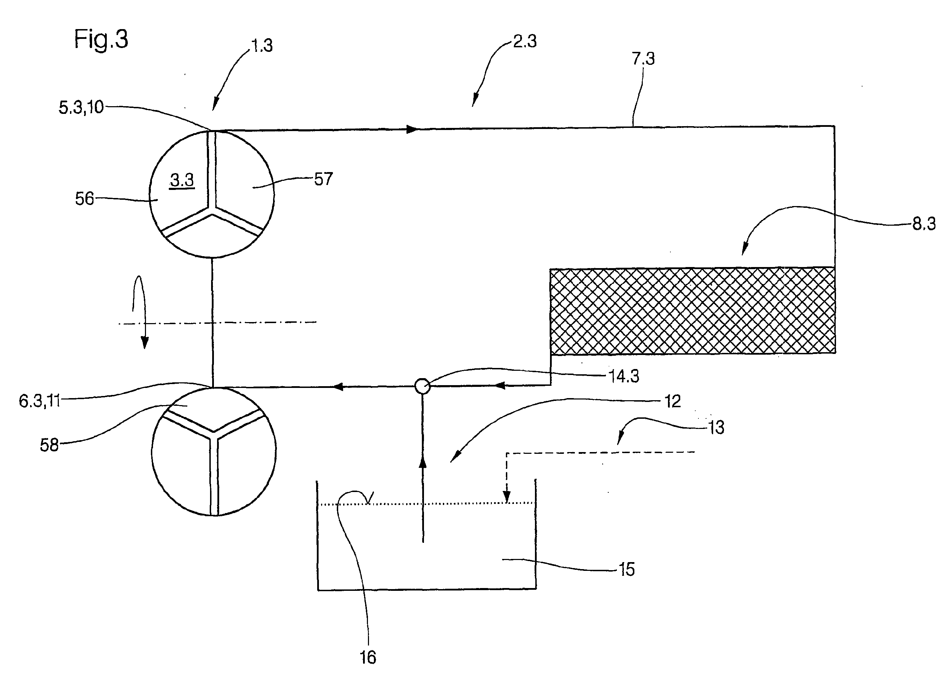

Die Figur 3 verdeutlicht anhand eines Schemas in stark vereinfachter Darstellung eine Ausführung eines hydrodynamischen Bauelementes 1.3 in Form eines hydrodynamischen Drehzahl-/Drehmomentenwandlers 55 mit geschlossenen Kreislauf 2.3. Der Grundaufbau entspricht dem in der Figur 1 bzw. 2b beschriebenen, weshalb für gleiche Elemente die gleichen Bezugszeichen verwendet werden.

Der hydrodynamische Drehzahl-/Drehmomeritwandler 55 umfaßt neben einem Pumpenrad 56 ein Turbinenrad 57 und mindestens ein Leitrad 58, wobei die einzelnen Schaufelräder einen torusförmigen Arbeitsraum 3.3 bilden. Auch hier ist dem hydrodynamischen Bauelement 1.3 ein geschlossener Kreislauf 2.3 zugeordnet, welcher den im torusförmigen Arbeitsraum 3.3 geführten Arbeitskreislauf 4.3 und einen externen Teil 7.3 des Kreislaufes 2.3 umfaßt. Der geschlossene Kreislauf 2.3 ist ebenfalls druckdicht ausgeführt und über eine Knotenstelle 14.3 mit Mitteln 12 zur Befüllung und Entleerung des geschlossenen Kreislaufes 2.3 und Mitteln 13 zur Beeinflussung des Füllungsgrades in Form von Mitteln zur Druckvorgabe bzw. Erzeugung eines statischen Überlagerungsdruckes zum Druck im geschlossenen Kreislauf 2.3.

### Bezugszeichenliste

- 1, 1.2, 1.3: hydrodynamisches Bauelement
- 2, 2.2, 2.3: geschlossener Kreislauf
- 3, 3.2, 3.3: torusförmiger Arbeitsraum
- 4, 4.2, 4.3: Arbeitskreislauf
- 5, 5.2, 5.3: Austritt
- 6, 6.2, 6.3: Zulauf
- 7, 7.2, 7.3: externe Teile des Kreislaufes 2
- 8: Mittel zur Beeinflussung der Temperatur des Betriebsmittels
- 9: Wärmetauscher
- 10, 10.2: Abströmraum
- 11, 11.2: Zufuhrraum
- 12: Mittel zur Befüllung
- 13: Mittel zur Druckbeaufschlagung
- 14, 14.2, 14.3: Knotenstelle
- 15: externer Betriebsmittel-Versorgungstank
- 16: Betriebsmittelspiegel
- 17: hydrodynamische Kupplung
- 18: Pumpenrad
- 19: Turbinenrad
- 20: Gehäuse
- 21: Antrieb
- 22: Zwischenraum
- 23: Gehäuseinnenwand
- 24: erster Gehäuseteil
- 25: Trennebene
- 26: Außenumfang
- 27: radial äußere Erstreckung des Turbinenrades
- 28: Mittel zur Abdichtung zwischen Turbinenrad und Gehäuse
- 29: zweiter Gehäuseteil
- 30: Innenfläche des zweiten Gehäuseteils
- 31: berührungsfreie Dichtung
- 32: drittes Gehäuseteilelement
- 33: rundes Gehäuse
- 34: Lageranordnung
- 35: Abtrieb
- 36: Abtriebswelle
- 37: zweiter Zwischenraum
- 38: Außenfläche des Pumpenrades
- 39: radial äußerer Bereich
- 40: Innenfläche
- 41: Mittel zur Abdichtung zwischen Pumpenradschale und Staudruckpumpengehäuse
- 42: berührungsfreie Dichtung
- 43: Durchlaßöffnung
- 44: Gehäusewand
- 45: Mittel zur Abfuhr von Betriebsmittel aus dem zweiten Zwischenraum
- 46: Staudruckpumpe
- 47: Pumpenradschale
- 48: Mittel zur Führung von Betriebsmittel im geschlossenen Kreislauf
- 49: Staudruckpumpenraum
- 50: Leitungsverbindungen, Betriebsmittel-Führungskanäle
- 51: Betriebsmittel-Speichereinrichtung
- 52: Leitungsverbindung
- 53: Mittel zur Abdichtung zwischen Pumpenrad und Turbinenrad
- 54: Mittel zur Erzeugung einer Druckwaage zwischen einem geschlossenen rotierenden Kreislauf und einem ruhenden Medium
- 55: hydrodynamischer Drehzahl-/Drehmomentwandler
- 56: Pumpenrad
- 57: Turbinenrad
- 58: Leitrad

## Patentansprüche

1. Hydrodynamisches Bauelement (1; 1.2; 1.3)
1.1 mit mindestens zwei rotierenden Schaufelrädern (18, 19), welche einen Arbeitsraum (3; 3.2; 3.3) für einen Arbeitskreislauf (4; 4.2; 4.3) bilden;
1.2 mit einem, mit dem Zulauf (6; 6.2; 6.3) zum Arbeitsraum (3; 3.2; 3.3) und einem Ablauf (5; 5.2; 5.3) vom Arbeitsraum (3; 3.2; 3.3) gekoppelten geschlossenen Kreislauf (2; 2.2; 2.3);
1.3 der geschlossene Kreislauf (2; 2.2; 2.3) ist druckdicht;
1.4 mit einer Knotenstelle (14) im geschlossenen Kreislauf (2; 2.2; 2.3) zum wahlweisen Anschluss von Mitteln zur Befüllung und Entleerung und Mitteln (13) zur Druckvorgabe; **gekennzeichnet durch** die folgenden Merkmale:
1.4 Die Mittel zur Befüllung und Entleerung und die Mittel (13) zur Druckvorgabe werden von einem System gebildet, umfassend einen mit Betriebsmittel befüllbaren Behälter (15, 51), welcher druckdicht an die Knotenstelle (14) im geschlossenen Kreislauf (2) im angebunden ist und Mittel zur Beaufschlagung des Betriebsmittelspiegels (16) im Behälter mit einem Luftdruck.

2. Hydrodynamisches Bauelement (1; 1.2; 1.3) nach Anspruch 1, **gekennzeichnet dadurch, daß** der geschlossene Kreislauf (2; 2.2; 2.3) aus dem im Arbeitsraum (3; 3.2; 3.3) geführten Arbeitskreislauf (4; 4.2; 4.3) und einem außerhalb des Arbeitsraumes (3; 3.2; 3.3) geführten externen Teiles (7; 7.2) gebildet wird.

3. Hydrodynamisches Bauelement nach einem der Ansprüche 1 bis 2, **dadurch gekennzeichnet, dass** der Ablauf (5; 5.2; 5.3) vom torusförmigen Arbeitsraum (3; 3.2; 3.3) mit einem Abströmraum (10; 10.2) gekoppelt ist, welcher einen Staudruckpumpenraum (49) zur Aufnahme stehender Staudruckrohre (46) bildet.

4. Hydrodynamisches Bauelement nach Anspruch 3, **dadurch gekennzeichnet, dass** eine Mehrzahl von Staudruckrohren (46) vorgesehen ist, welche in Umfangsrichtung im bestimmten Abstand zueinander angeordnet sind.

5. Hydrodynamisches Bauelement nach einem der Ansprüche 1 bis 4, **dadurch gekennzeichnet, dass** Mittel zur Beeinflussung der Temperatur des Betriebsmittels im externen Teil (7) des Kreislaufes (2; 2.2; 2.3) angeordnet sind.

6. Hydrodynamisches Bauelement nach Anspruch 5, **dadurch gekennzeichnet, dass** die Mittel (8) einen Wärmetauscher (9) umfassen.

7. Hydrodynamisches Bauelement nach Anspruch 6, **dadurch gekennzeichnet, dass** die Mittel (8) mindestens eine Kühleinrichtung umfassen.

8. Hydrodynamisches Bauelement nach einem der Ansprüche 1 bis 7, **dadurch gekennzeichnet, dass** dieses als hydrodynamische Kupplung (17), umfassend ein Pumpenrad (18) und ein Turbinenrad (19), welche mindestens einen torusförmigen Arbeitsraum (3; 3.2; 3.3) miteinander bilden, ausgeführt ist.

9. Hydrodynamisches Bauelement nach Anspruch 8, **gekennzeichnet durch** die folgenden Merkmale:
9.1 das Pumpenrad (18) umfasst ein, das Turbinenrad (19) in axialer Richtung umschließendes und mit dem Pumpenrad (18) drehfest verbundenes Gehäuse (20);
9.2 mit Mitteln zur Abdichtung (28) zwischen dem Turbinenrad (19) und dem mit dem Pumpenrad (18) drehfest verbundenen Gehäuse (20);
9.3 mit zweiten Mitteln zur Abdichtung (41) zwischen dem mit dem Pumpenrad (18) drehfest verbundenen Gehäuse (20) und einem ortsfest angeordneten Gehäuse (33);
9.4 mit Mitteln zur Abdichtung (53) zwischen dem Pumpenrad (18) und dem Turbinenrad (19) unterhalb des Innendurchmessers (d_{E}) des torusförmigen Arbeitsraumes (3; 3.2; 3.3);
9.5 mit druckdicht angeschlossenen Leitungsverbindungen an den Zuführraum (11; 11.2) und den Abströmraum vom torusförmigen Arbeitsraum (3; 3.2; 3.3).

10. Verwendung eines hydrodynamischen Bauelements (1; 1.2; 1.3) nach einem der Ansprüche 1 bis 9 als Anfahreinheit in einem Fahrzeug.

## Claims

1. A hydrodynamic component (1; 1.2; 1.3),
1.1 with at least two rotating blade wheels (18, 19) which form a working chamber (3; 3.2; 3.3) for a working circulation (4; 4.2; 4.3);
1.2 with a closed circulation (2; 2.2; 2.3) coupled with the inlet (6; 6.2; 6.3) to the working chamber (3; 3.2; 3.3) and a discharge (5; 5.2; 5.3) from the working chamber (3; 3.2; 3.3);
1.3 with the closed circulation (2; 2.2; 2.3) being pressure-tight;
1.4 with a node point (14) in the closed circulation (2; 2.2; 2.3) for optional connection of means for filling and discharging and means (13) for predetermining the pressure;
**characterized by** the following features:
1.5 the means for filling or discharging and the means (13) for predetermining the pressure are formed by a system, comprising a container (15, 51) which can be filled with an operating medium and which is linked in a pressure-tight manner to the node point (14) in the closed circulation (2), and means for pressurizing the operating medium level (16) in the container with an air pressure.

2. A hydrodynamic component (1; 1.2; 1.3) according to claim 1, **characterized in that** the closed circulation (2; 2.2; 2.3) is formed by the working circulation (4; 4.2; 4.3) guided in the working chamber (3; 3.2; 3.3) and an external part (7; 7.2) guided outside of the working chamber (3; 3.2; 3.3).

3. A hydrodynamic component according to one of the claims 1 to 2,
**characterized in that** the discharge (5; 5.2; 5.3) is coupled from the toroidal working chamber (3; 3.2; 3.3) with a outflow chamber (10; 10.2) which forms a back-pressure pump chamber (49) for receiving standing back-pressure pipes (46).

4. A hydrodynamic component according to claim 3, **characterized in that** a plurality of back-pressure pipes (46) are provided which are arranged in the circumferential direction at a certain distance relative to each other.

5. A hydrodynamic component according to one of the claims 1 to 4,
**characterized in that** the means for influencing the temperature of the operating medium are arranged in the external part (7) of the circulation (2; 2.2; 2.3).

6. A hydrodynamic component according to claim 5, **characterized in that** the means (8) comprise a heat exchanger (9).

7. A hydrodynamic component according to claim 6, **characterized in that** the means (8) comprise at least one cooling device.

8. A hydrodynamic component according to one of the claims 1 to 7,
**characterized in that** the same is configured as a hydrodynamic coupling (17), comprising a pump wheel (18) and a turbine wheel (19) which form at least one toroidal working chamber (3; 3.2; 3.3) with each other.

9. A hydrodynamic component according to claim 8, **characterized by** the following features:
9.1 the pump wheel (18) comprises a housing (20) which encloses the turbine wheel (19) in the axial direction and is torsionally rigidly connected with the pump wheel (18);
9.2 with means for sealing (28) between the turbine wheel (19) and the housing (20) which is torsionally rigidly connected with the pump wheel (18);
9.3 with two means for sealing (41) between the housing (20) which is torsionally rigidly connected with the pump wheel (18) and a housing (33) arranged in a stationary manner;
9.4 with means for sealing (53) between the pump wheel (18) and the turbine wheel (19) beneath the inside diameter (d_{E}) of the toroidal working chamber (3; 3.2; 3.3).
9.5 with line connections connected in a pressure-tight manner to the feeding chamber (11; 11.2) and the discharge chamber from the toroidal working chamber (3; 3.2; 3.3).

10. Use of a hydrodynamic component (1; 1.2; 1.3) according to one of the claims 1 to 9 as a starting unit in a vehicle.

## Revendications

1. Élément hydrodynamique (1 ; 1.2 ; 1.3)
1.1 avec au moins deux roues à aubes (18, 19) rotatives formant un espace de travail (3 ; 3.2 ; 3.3) pour un circuit de travail (4 ; 4.2 ; 4.3) ;
1.2 avec un circuit fermé (2 ; 2.2 ; 2.3) couplé à l'arrivée (6 ; 6.2 ; 6.3) dans l'espace de travail (3 ; 3.2 ; 3.3) et à une sortie (5 ; 5.2 ; 5.3) de l'espace de travail (3 ; 3.2 ; 3.3) ;
1.3 le circuit fermé (2 ; 2.2 ; 2.3) est étanche à la pression ;
1.4 avec une jonction (14) dans le circuit fermé (2 ; 2.2 ; 2.3) pour le raccordement sélectif de moyens pour le remplissage et la vidange et de moyens (13) pour la détermination de la pression ;
**caractérisé en ce que** les moyens pour le remplissage et la vidange et les moyens (13) pour la détermination de la pression sont formés par un système comprenant un réservoir (15, 51) pouvant être rempli de fluide de fonctionnement, qui est relié de manière étanche à la pression à la jonction (14) dans le circuit fermé (2) et des moyens pour appliquer une pression d'air au fluide de fonctionnement (16) dans le réservoir.

2. Élément hydrodynamique (1 ; 1.2 ; 1.3) selon la revendication 1, **caractérisé en ce que** le circuit fermé (2 ; 2.2 ; 2.3) est formé par le circuit de travail (4 ; 4.2 ; 4.3) sortant de l'espace de travail (3 ; 3.2 ; 3.3) et par une partie externe (7 ; 7.2) passant à l'extérieur de l'espace de travail (3 ; 3.2 ; 3.3).

3. Élément hydrodynamique selon l'une quelconque des revendications 1 à 2, **caractérisé en ce que** l'écoulement (5 ; 5.2 ; 5.3) de l'espace de travail toroïdal (3 ; 3.2 ; 3.3) est couplé à un espace d'écoulement (10 ; 10.2) qui forme un espace de pompage à pression dynamique (49) destiné à recevoir des tuyaux de pression dynamique (46) verticaux.

4. Élément hydrodynamique selon la revendication 3, **caractérisé en ce qu'**il est prévu une pluralité de tuyaux de pression dynamique (46) verticaux, qui sont disposés à une distance définie les uns des autres sur la circonférence.

5. Élément hydrodynamique selon l'une quelconque des revendications 1 à 4, **caractérisé en ce qu'**il est prévu des moyens pour influer sur la température du fluide de travail dans la partie externe (7) du circuit (2 ; 2.2 ; 2.3).

6. Élément hydrodynamique selon la revendication 5, **caractérisé en ce que** les moyens (8) comprennent un échangeur de chaleur (9).

7. Élément hydrodynamique selon la revendication 6, **caractérisé en ce que** les moyens (8) comprennent au moins un dispositif de refroidissement.

8. Élément hydrodynamique selon l'une quelconque des revendications 1 à 7, **caractérisé en ce qu'**il est réalisé comme un accouplement hydrodynamique (17), comprenant une roue de pompe (18) et une roue de turbine (19) qui forment ensemble au moins un espace de travail toroïdal (3 ; 3.2 ; 3.3).

9. Élément hydrodynamique selon la revendication 8, **caractérisé en ce que** :
9.1 la roue de pompe (18) comprend un corps (20) entourant la roue de turbine (19) dans le sens axial et relié de façon solidaire en rotation à la roue de pompe (18) ;
9.2 avec des moyens d'étanchéité (28) entre la roue de turbine (19) et le corps (20) relié de façon solidaire en rotation à la roue de pompe (18) ;
9.3 avec des deuxièmes moyens d'étanchéité (41) entre le corps (20) relié de façon solidaire en rotation à la roue de pompe (18) et un logement (33) stationnaire ;
9.4 avec des moyens d'étanchéité (53) entre la roue de pompe (18) et la roue de turbine (19) en dessous du diamètre intérieur (d_{E}) de l'espace de travail toroïdal (3 ; 3.2 ; 3.3) ;
9.5 avec des conduites de communication raccordées de manière étanche à la pression à l'espace d'entrée (11 ; 11.2) et à l'espace de sortie de l'espace de travail toroïdal (3 ; 3.2 ; 3.3).

10. Utilisation d'un élément hydrodynamique (1 ; 1.2 ; 1.3) selon l'une quelconque des revendications 1 à 9 comme unité de démarrage dans un véhicule.
